# EUROPÄISCHE PATENTSCHRIFT

(11) **EP 2 199 761 B1**
(45) Veröffentlichungstag und Bekanntmachung des Hinweises auf die Patenterteilung: **22.09.2010**
(21) Anmeldenummer: 08106016.2
(22) Anmeldetag: 19.12.2008
(51) Int. Cl.: G01F 23/284

(54) **Sensor und Verfahren zur Messung der Entfernung einer Grenzfläche**
Sensor and method for monitoring the distance of a boundary area
Capteur et procédé de mesure de l'éloignement d'une surface limite

(43) Veröffentlichungstag der Anmeldung: 23.06.2010
(73) Patentinhaber: SICK AG, 79183 Waldkirch (DE)
(72) Erfinder: Weber, Thomas, 77960 Seelbach (DE); Heidepriem, Sebastian, 79359 Riegel (DE); Blöhbaum, Frank, 79112 Freiburg (DE)
(74) Vertreter: Hehl, Ulrich

(56) Entgegenhaltungen:
- DE-A1-102005 021 358
- GB-A- 2 350 004
- US-B1- 6 628 229

## Beschreibung

Die Erfindung betrifft einen Sensor und ein Verfahren zur Messung der Entfernung einer Grenzfläche gemäß den Oberbegriffen von Anspruch 1 beziehungsweise 12.

Es ist aus vielen Anwendungen bekannt, den Abstand zu einer Grenzfläche aus der Laufzeit eines Mikrowellensignals zu bestimmen. Eine Möglichkeit ist, das Signal frei abzustrahlen, wie dies beim Radar geschieht. Wegen der unkontrollierten Wellenausbreitung wird häufig das TDR-Messprinzip (time domain reflectometry) bevorzugt. Es basiert auf der Bestimmung von Laufzeiten eines elektromagnetischen Signals, um den Abstand einer Diskontinuität des Leitungswellenwiderstandes wie etwa eines Kabelbruchs oder einer Grenzfläche zwischen zwei Medien zu ermitteln. Der Unterschied zum Radar besteht darin, dass die elektromagnetischen Wellen nicht ins Freie abgestrahlt, sondern entlang eines Leiters geführt werden. Eine der ältesten Anwendungen des TDR-Prinzips ist die Lokalisierung von Brüchen in Überseeleitungen. Man kann TDR ebenso nutzen, um Füllstände in einem Behälter zu bestimmen, Leitungen in elektronischen Schaltungen zu testen oder um für Bauplanung oder Landwirtschaft den Feuchtigkeitsgehalt des Erdbodens in bestimmten Tiefen zu bestimmen.

Bei einer TDR-Messung wird ein sehr kurzer elektrischer Sendeimpuls in den Leiter eingespeist und durchläuft ihn in Richtung des gegenüberliegenden Endes. Trifft der Impuls auf eine Störstelle, was gleichbedeutend mit einer Änderungen des örtlichen Wellenwiderstand ist, wird ein Teil der Sendeenergie zum Leitungseingang zurückreflektiert. Aus der Laufzeit zwischen dem Aussenden des Sendeimpulses und dem Empfang der Reflexion lässt sich die Position der Störstelle ortsgenau errechnen. Für Anwendungen zur Füllstandsmessung ist der Leiter als Monosonde oder Koaxialsonde ausgebildet, welche senkrecht oder schräg in den Tank eingeführt wird und möglichst dicht bis zum Boden reicht, um den vollen Messbereich abzudecken.

Um den Empfangszeitpunkt genau bestimmen zu können, wird der Verlauf des Empfangssignals abgetastet und einer digitalen Auswertung zugeführt. Da die Pulsbreite in der Größenordnung von nur einigen hundert Pikosekunden liegt, müsste ein A/D-Wandler im hohen Gigahertzbereich arbeiten, um den Pulsverlauf aufzulösen. Derartige Bauteile sind unverhältnismäßig teuer.

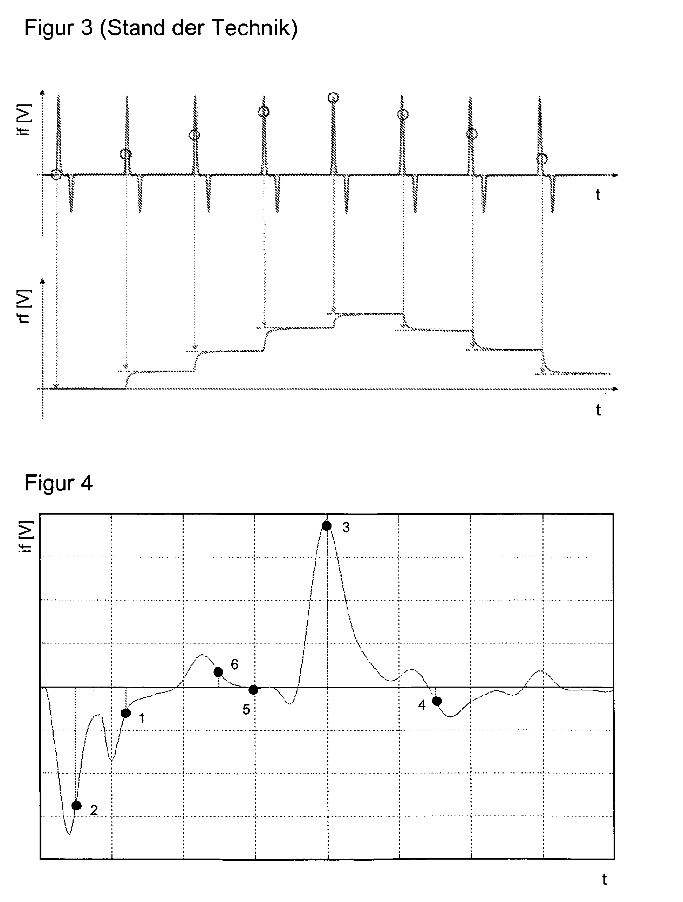

Daher wird eine Zeitdehnung vorgenommen. Das Prinzip ist in Figur 3 veranschaulicht. Im oberen Teil der Figur 3 ist das Empfangssignal dargestellt, welches eine Vielzahl von Empfangspulsen aufweist, die jeweils auf den wiederholt gesandten Messpuls folgen. Da ein verfügbarer A/D-Wandler die einzelnen Pulse nicht auflösen kann, wird jeder Empfangspuls nur an einer einzigen Stützstelle abgetastet, wobei aber die Stützstelle mit jeder Wiederholung ein kleines Stück verschoben wird. Damit resultiert das im unteren Teil der Figur 3 dargestellte zeitgedehnte Signal, das von dem A/D-Wandler erfasst werden kann.

Herkömmlich werden die erforderlichen zeitlichen Verschiebungen aus einem kleinen Frequenzunterschied zwischen Sendefrequenz f1 und Abtastfrequenz f2 erzeugt. Für die erste Stützstelle wird ein Zeitpunkt T₁:=0 gewählt, etwa der Beginn des Sendepulses. Die weiteren Stützstellen liegen dann zu Zeitpunkten Tₙ:=Tₙ₋₁+dT, wobei dT durch die beiden Frequenzen als dT=1/f11-1/f2 üblicherweise im Bereich von 5-100ps gegeben ist, mit einem Zeitdehnungsfaktor f1/(f2-f1). Der Samplingzeitpunkt wandert also systembedingt von Empfangspuls zu Empfangspuls gleichmäßig, linear und streng monoton ansteigend.

In der Einleitung der US 2007/0192391 A1 ist dieses herkömmliche Verfahren beschrieben. Bei einer Sendefrequenz von 2 MHz und einer Abtastfrequenz von 1,99999 MHz beträgt die Offsetfrequenz 10 Hz, und damit verschiebt sich der Abtastzeitpunkt über eine Periode von 100 Millisekunden linear und regelmäßig gegenüber dem Sendezeitpunkt in einem der geringen Differenzperiode entsprechenden feinen Zeitraster mit einem Zeitdehnungsfaktor von 200.000. Der Abtasttakt wird dabei mittels einer PLL (Phase-locked Loop) an den Sendetakt gekoppelt.

Die Zeitdehnung nach dem Stand der Technik hat zumindest zwei gravierende Nachteile. Ein erster Nachteil ist die lange Synchronisierungsperiode der PLL von mindestens 100 Millisekunden, bedingt durch den kleinen Frequenzunterschied. Die kleine Bandbreite der Regeldynamik macht es der PLL unmöglich, schnell genug auf Störungen der Oszillatoren beispielsweise durch elektromagnetische Störstrahlung (EMV) zu reagieren, die PLL-Strukturen haben ein zu hohes Phasenrauschen. Die Folge sind entweder unter Störeinfluss erheblich beeinträchtigte Messgenauigkeiten durch Jitter der Abtaststützstellen oder zusätzliche Kosten für Maßnahmen zur EMV-Abschirmung.

Den ersten Nachteil vermeidet die US 2007/0192391 A1, indem das kleine Frequenzoffset mittels direkter digitaler Synthese (DDS) eingestellt wird. Damit ist eine größere Störfestigkeit erreicht, und auch die Regeldynamik der durch den DDS-Baustein ersetzten PLL spielt keine Rolle mehr. Diese Stabilität wird aber mit dem zusätzlichen Bedarf eines DDS-Bausteins hoher Phasenauflösung erkauft.

Ein zweiter wesentlicher Nachteil des herkömmlichen Vorgehens ist, dass durch das Undersampling für die Zeitdehnung der extrem kurzen und damit hochfrequente Anteile aufweisenden Empfangspulse mit jeweils nur einer Stützstelle je einzelnem Empfangspuls das Nyquist-Kriterium nicht eingehalten und damit das Abtasttheorem massiv verletzt wird. Eine Tiefpass- oder Aliasfilterung, um die Einhaltung des Nyquist-Kriteriums zu erzwingen, kommt nicht in Betracht, da damit Messinformation verloren geht. Bei Störsignalen ergeben sich deshalb Faltprodukte im Nutzsignalband, welche die Signalauswertung verhindern oder beeinträchtigen. Dieser Aliaseffekt wirkt sich bei amplitudenmodulierten HF-Störsignalen besonders stark aus.

Man kann versuchen, den Störungen durch bessere EMV-Abschirmung zu begegnen, aber die Robustheit der eigentlichen Auswertung wird so nicht verbessert. Überdies müsste nicht nur der Sensor selbst abgeschirmt werden, sondern auch dessen Anschlussleitungen abgeschirmt oder vereinzelt fern von störenden Fremdleitungen verlegt werden. Das ist nicht nur aufwändig, sondern stellt auch externe Bedingungen, die der Sensor als solcher nicht erfüllen kann. Denkbar ist auch eine Entkopplung, aber dafür werden kostentreibende zusätzliche Elemente benötigt.

Eine andere Möglichkeit, günstige Rahmenbedingungen für das herkömmliche Verfahren zu schaffen, bieten adaptive Filter, welche die Störsignale beseitigen. Das ist aber aufwändig und, besonders bei dynamischen Störsignalen, auch nicht immer erfolgreich.

Unabhängig von TDR-Messungen ist aus dem Bereich der drahtlosen Kommunikation das Zeitsprungverfahren bekannt. Dabei variiert jeder Teilnehmer in zufälliger Abfolge den Zeitschlitz, innerhalb dessen er sendet. Verwendet ein anderer Teilnehmer parallel dasselbe Verfahren, so kollidiert nur ein kleiner Anteil der gewählten Zeitschlitze. Zugleich bietet das Zeitsprungverfahren einen gewissen Abhörschutz, da zum Decodieren bei Empfang die zufällige Sequenz der gewählten Zeitschlitze bekannt sein muss. Das Ziel des Zeitsprungverfahrens ist also nicht Störunterdrückung, sondern Schaffung einer Möglichkeit, mit der mehrere Teilnehmer ohne Absprache auf derselben Frequenz senden können.

Das herkömmliche System, sowohl das in der Einleitung der US 2007/0192391 A1 beschriebene als auch die spätere Verbesserung mittels DDS, lässt keine Abweichung von linear ansteigenden Abtastzeitpunkten zu. Liegt die aktuell abgetastete Stützstelle zu einem Zeitpunkt Tₙ, so steht eine beliebige andere Stützstelle Tₘ im Mittel erst wieder nach einer vollen Schwebungsperiode von 100 Millisekunden zur Verfügung. Da für eine Messung eine Vielzahl von Stützstellen abgetastet werden muss, ist eine solche Wiederholungsrate viel zu langsam, um aktuelle Messwerte mit akzeptabler Ansprechzeit zu liefern. Die Änderungsrate für den Füllstand ist damit begrenzt.

Aus der DE 10 2005 021 358 A1 ist ein Laufzeitmessverfahren zur Ermittlung der Distanz bekannt. Dabei wird periodisch ein Sendesignal mit einer Pulsrepetierfrequenz ausgesandt und durch ein mit einer Abtastfrequenz erzeugtes Abtastsignal in ein zeitgedehntes Zwischenfrequenzsignal transformiert. Das Messsignal wird mit einem Bandpassfilter hoher Güte gefiltert. Statt nun einen Bandpassfilter mit einer an die Zwischenfrequenz angepassten Mittenfrequenz zu wählen, sieht die DE 10 2005 021 358 A1 umgekehrt vor, die Zwischenfrequenz an den Bandpassfilter anzupassen, indem Pulsrepetierfrequenz und/oder Abtastfrequenz insbesondere iterativ variiert werden.

Die US 6,628,229 B1 offenbart, Füllstände mittels Radarpulsen zu messen, wobei die Sendefrequenz leicht gegenüber der Empfangsfrequenz verschoben ist. Dabei werden Sende- und Empfangsfrequenz aus einem Referenzoszillator abgeleitet.

Die DE199 49 992 A1 offenbart ein Verfahren zur Erhöhung der Störfestigkeit eines Zeitbereichsreflektometers. Dabei werden die Pulsrepetierfrequenz und die Abtastfrequenz so lange verändert, bis ein für eine ausreichende Messgenauigkeit hinreichend störungsfreies Reflektionsprofil erreicht wird.

Es ist daher Aufgabe der Erfindung, für die beschriebenen Systeme eine robustere Möglichkeit der Zeitdehnung zu finden.

Diese Aufgabe wird durch einen Sensor gemäß Anspruch 1 und ein Verfahren zur Messung der Entfernung einer Grenzfläche nach Anspruch 12 gelöst. Die Erfindung basiert auf der Grundidee, periodische Störer zu verteilen, um sie durch Mittelwertbildung unterdrücken zu können. Dies wird erfindungsgemäß mittels eines Durchmischens oder Scramblings der Abtastzeitpunkte erreicht. Da herkömmliche Zeitdehnungsverfahren ein Scrambling gar nicht erlauben würden, ist ein zusätzlicher Aspekt der Erfindung, eine freie Wahl der Stützstellen zu ermöglichen.

Nach dem Stand der Technik ist nämlich die Stützstelle in jeder Wiederholung durch die Differenzfrequenz zwischen Sende- und Abtastfrequenz festgelegt. Bezogen auf den ersten Abtastpunkt ist also die zeitliche Verschiebung herkömmlich nicht wählbar, sondern streng proportional zu k. Mit der erfindungemäßen Tabelle oder Rechenvorschrift kann jegliche vorgegebene oder algorithmisch ermittelte Wahl der Stützstellen anders als gleichmäßig fortschreitend oder durch die Schwebung vorgegeben realisiert werden.

Die Erfindung hat den Vorteil einer verbesserten Messgenauigkeit unter realen Einsatzbedingungen. Die Messung wird in sich robust gegen Störsignale, so dass Maßnahmen wie Abschirmungen, Entkopplungen oder adaptive Filter nicht erforderlich sind oder zur Erreichung einer noch besseren Störfestigkeit unterstützt werden.

Wie einleitend im Zusammenhang mit Figur 3 erläutert, wird gewöhnlich in jeder der k Wiederholungen des Sendesignals nur eine Stützstelle abgetastet. Grundsätzlich ist mit schneller Elektronik auch denkbar, in jeder Wiederholung zwei oder mehr Stützstellen auszuwerten. Der Vorteil der Zeitdehnung und damit der Erfindung bleibt dann erhalten, weil die Elektronik zwar schnell genug sein muss, an den mehreren Stützstellen abzutasten, nicht jedoch so schnell, dass die Stützstellendichte bereits für eine Auswertung hinreicht.

Die übliche Signalform ist ein sehr kurzer Puls mit einer Breite in der Größenordnung von einigen hundert Pikosekunden oder weniger, und deshalb wird in dieser Beschreibung oft vereinfachend von einem Puls gesprochen. Denkbar sind aber auch andere Signalformen, beispielsweise Mehrfachpulse oder auch stufenförmige Signale. Ein weiteres Beispiel für eine Signalform ist ein Hochfrequenzträger mit einer Amplitudenmodulation, beispielsweise in Form eines Bursts. Auch hier wird die Form der Hüllkurve in ähnlicher Weise zeitgedehnt abgetastet wie bei einem Pulsverfahren, wie dies etwa in der WO 2007/093270 A1 ausgeführt ist. Wichtig ist lediglich eine lokale Änderung der Signalform, um Sende- und Empfangszeitpunkt festlegen zu können. An der Problematik der Zeitdehnung ändert sich dabei deshalb nichts, weil der interessierende Effekt sich auch bei breiteren Signalen schnell jeweils auf der genannten Zeitskala im Bereich von einigen hundert Pikosekunden abspielt, somit die hochfrequenten Signalanteile die Messgenauigkeit mitbestimmen.

Als Grenzfläche kommen Übergänge zwischen Medien mit unterschiedlicher Permittivität, beispielsweise Luft/Flüssigkeit oder die Grenzschicht zwischen zwei Fluiden in Betracht, aber auch Störungen oder Brüche in einem Leiter oder Änderungen des umgebenden Mediums, wie im Falle des Feuchtigkeitsgehalts von Erdboden.

Die Tabelle oder Rechenvorschrift gibt bevorzugt eine zufällige oder pseudozufällige Abtastreihenfolge vor, insbesondere durch Ziehen ohne Zurücklegen mit einem Zufallsgenerator. Als Zufallsgenerator wird weiter bevorzugt ein solcher mit hoher Güte eingesetzt. Mit diesem Vorgehen ist eine gleichmäßig aufgelöste Abtastung der Empfangssignalform sichergestellt. Mit zufälligen Abtastreihenfolgen wird jegliche Periodizität oder Systematik in Störsignalen zerstört, die zu Aliaseffekten führen könnte. Auch einen Zufallsgenerator kann man als Funktion von k auffassen, der jeweils die k-te Zufallszahl einer Sequenz ausgibt. In der Praxis werden keine echten physikalischen Zufallszahlen verwendet, sondern ein algorithmisches Verfahren für Pseudozufallszahlen. Solche Algorithmen sind bei Vorgabe eines Startwerts (Seed) deterministisch. Gute Zufallsgeneratoren liefern bei auch geringfügiger Änderung des Seeds vollkommen unkorrelierte Zufallssequenzen, oder anders ausgedrückt, die Autokorrelation ist möglichst nahe einer Deltafunktion beziehungsweise zeigt zumindest nur betragsmäßig kleine Nebenmaxima. Es bilden sich keinerlei Regelmäßigkeiten oder Muster, die ihrerseits Artefakte in das Messsignal einführen könnten. Deshalb sollten die Zufallszahlen auch bevorzugt dynamisch erzeugt werden, beispielsweise mit einem Seed, das unter Berücksichtigung einer kleinen Zeiteinheit der aktuellen Tageszeit wie etwa die Minute, Sekunde oder Millisekunde abgeleitet wird. Ein Beispiel für einen Zufallsgenerator mit wenig Korrelationen zur Reihenfolge in der Zufallssequenz ist der Mersenne-Twister. Ein Vorteil von deterministischen Zufallsgeneratoren ist, dass die Kenntnis des Seeds ausreicht, um die Sequenz zu reproduzieren, beispielsweise wenn die Auswertung zeitlich vom physikalischen Empfang entkoppelt werden soll.

Die Steuerung ist bevorzugt dafür ausgebildet, die Aufnahme eines Einzelempfangssignals I-fach zu wiederholen und durch Verrechnen der Einzelempfangssignale ein Gesamtempfangssignal zu erzeugen. Es entsteht also letztlich eine geschachtelte Iteration: Mit jeder I-fachen Wiederholung der Aufnahme eines Einzelempfangssignals werden k₁...kₗ Stützstellen abgetastet, wobei die kᵢ bevorzugt untereinander gleich sind. In das Gesamtempfangssignal gehen also insgesamt I Einzelempfangssignale und damit k*I einzelne gesendete und empfangene Pulse ein. Die Verrechnung der Einzelempfangssignale zu dem Gesamtempfangssignal ist im einfachsten Fall eine Bildung des Scharmittelwerts über die Einzelempfangssignale, es sind aber auch vor- und nachgeschaltete Filterschritte beziehungsweise andere Maße als reine Mittelwertbildung denkbar.

Die Tabelle oder Rechenvorschrift weist besonders bevorzugt eine Abhängigkeit von der Wiederholung auf. Die Scramblingsequenz wird also mit jeder oder zumindest in einigen der I Wiederholungen variiert. Die Tabelle oder Rechenvorschrift ist somit abhängig von I, was gleichbedeutend damit ist, dass für jedes oder einige der I Einzelempfangssignale eine eigene Tabelle oder Rechenvorschrift existiert Vorteilhafterweise ist mindestens ein Filter vorgesehen, welcher dafür ausgebildet ist, die Einzelempfangssignale und/oder das Gesamtempfangssignal von niederfrequenten Anteilen zu befreien. Als Filter kommt demnach beispielsweise ein Hochpass oder auch ein Bandpass in Betracht. Dieser kann ein elektronisches Bauteil sein oder digital implementiert werden. Der Vorteil der Filterung ist, dass damit niederfrequente Störer eliminiert werden, deren langsames Frequenzverhalten durch das Scrambling nicht sinnvoll unterdrückt würde. Das Sendesignal ist extrem kurz, daher tragen vor allem die hohen Frequenzen für das Messergebnis relevante Informationen.

Bevorzugt ist eine Zeitbasiseinheit vorgesehen, welche dafür ausgebildet ist, die zeitlichen Verschiebungen zur Verfügung zu stellen, indem das Signal zu mittels einer ersten Frequenz festgelegten Sendezeitpunkten ausgesandt und die jeweils empfangenen Signale zu mittels einer zweiten Frequenz ungleich der ersten Frequenz festgelegten Abtastzeitpunkten abgetastet werden. Die entstehende Differenzperiode ermöglicht eine Abtastung für das zeitgedehnte Signal auf einem hoch aufgelösten Zeitraster.

Dabei weist die Zeitbasiseinheit bevorzugt mindestens eine DDS-Einheit auf, mittels derer die erste und/oder die zweite Frequenz erzeugbar ist. Ein solcher Baustein verhindert Probleme mit der Stabilität der beiden Frequenzen und damit einen Jitter in den Stützstellen, welcher das Messergebnis verschlechtert.

Die Zeitbasiseinheit ist alternativ bevorzugt dafür ausgebildet, die erste Frequenz und die zweite Frequenz mit jeweils einem ganzzahligen Teiler aus einem gemeinsamen Mastertakt abzuleiten, so dass die Differenzfrequenz zwischen der ersten Frequenz und der zweiten Frequenz gleich oder ein Vielfaches einer dem Mastertakt entsprechenden Masterfrequenz ist. Im Gegensatz zu herkömmlichen Verfahren wird dabei keine extrem kleine Differenzfrequenz zwischen erster und zweiter Frequenz angestrebt, die zu Stabilitätsproblemen der Stützstellen führt. Die erforderliche Auflösung wird im Gegenteil bei möglichst hoher Differenzfrequenz zwischen Sende- und Abtastfrequenz erzeugt. Gleiche relative Phasenlagen zwischen Sende- und Abtastfrequenz stellen sich bereits nach der Periode des Mastertakts ein, nicht erst nach beispielsweise 100 Millisekunden wie im Stand der Technik. Diese erheblich höhere Repetierrate gleicher Frequenzbedingungen ermöglicht eine schnelle Scramblingsequenz und damit zusätzliche Freiheitsgrade für den Sampler und für das Abtastverfahren. Außerdem ist durch die schnellere Rückkopplung das Zeitverhalten zwischen Senden und Abtasten stabilisiert und Jitter der Abtastpunkte deutlich reduziert. Nahezu beliebige Zeitdehnungsfaktoren sind stabil realisierbar. Dabei können kostengünstige einfache Schaltungen oder sogar Softwarelösungen verwendet werden.

Diese Zeitbasiseinheit weist bevorzugt eine erste PLL mit einem ersten Teiler des Mastertaktes für die erste Frequenz und eine zweite PLL mit einem zweiten Teiler des Mastertaktes für die zweite Frequenz auf, wobei der erste Teiler und der zweite Teiler so gewählt sind, dass eine möglichst kleine Differenzperiode im Bereich einiger hundert, einiger zehn oder einiger Pikosekunden entsteht. Sowohl die Sendezeitpunkte als auch die Abtastzeitpunkte sind somit durch jeweils eine PLL auf den Mastertakt gelockt und damit stabilisiert. Die hohe, durch den gemeinsamen Mastertakt wesentlich verbesserte Regelbandbreite dieser PLL-Struktur vermeidet ohne kostenintensive Schaltungen die einleitend als erster Nachteil beschriebenen Störungen.

Die Masterfrequenz ist bevorzugt größer als 500 kHz, liegt insbesondere im Bereich von 5 MHz bis 25 MHz, und der erste und der zweite Teiler liegen bevorzugt im Bereich zwischen 2 und 100, insbesondere zwischen 30 und 70. Eine hohe gemeinsame Grundfrequenz ermöglicht kurze Synchronisationsperioden, und die kleinen Teiler gegenüber herkömmlich erforderlichen Teilern im Bereich 10⁴ sorgen für eine schnelle Rückkoppelschleife in der PLL und verhindern damit ein Auseinanderlaufen der Frequenzen. Ein konkretes Zahlenbeispiel ist ein Mastertakt von 10 MHz und ein Teilerpaar 40/41. Je nach Stabilität der PLLs und Vorgaben der verwendeten digitalen Bausteine können andere Teiler und damit andere Einstellmöglichkeiten vorgesehen sein. Die beiden Teiler sollten untereinander teilerfremd sein, bevorzugt die Relation n und n+1 erfüllen. Eine nicht teilerfremde Wahl führt zu gleichen Abtastzeitpunkten, etwa bei 5 und 10, oder zu einem nicht optimalen Undersampling, etwa bei 42 und 40.

Sende- und Abtastfrequenz werden bevorzugt regelmäßig, insbesondere mit jeder Masterperiode auf den Mastertakt synchronisiert. Durch den Bezug auf den einen stabilen Mastertaktgeber werden die PLLs schnell nachgeregelt, und die beiden Frequenzen können maximal über das kurze Synchronisationsfenster auseinanderlaufen. Dabei kann die Synchronisierung jedes Mal erfolgen, wenn die Perioden theoretisch zusammenfallen müssten, im Beispiel von 400 MHz und 410 MHz also alle 100 ns, oder nur jedes n-te Mal, also in Vielfachen von 100 ns.

Die Zeitbasiseinheit ist bevorzugt dafür ausgebildet, beliebige zeitliche Verschiebungen zwischen Sendezeitpunkten und Abtastzeitpunkten mit einer durch die Differenzfrequenz gegebenen zeitlichen Auflösung zur Verfügung zu stellen. Damit kann gezielt und beliebig von der herkömmlichen starren, monoton und linear ansteigenden Frequenzverschiebung abgewichen werden. Dazu wird Buch geführt, in welcher Periode sich die beiden Frequenzen jeweils befinden, um damit beliebige Zeitintervalle auszukoppeln, deren Genauigkeit durch die Differenzperiode gegeben ist. Zu diesem Zweck weist besonders bevorzugt die Zeitbasiseinheit einen ersten Zähler und einen zweiten Zähler auf, um die vollständigen Perioden der ersten Frequenz beziehungsweise der zweiten Frequenz zu zählen, wobei die Zähler insbesondere getriggerte Schieberegister aufweisen, und ist weiterhin bevorzugt dafür ausgebildet, die zeitliche Verschiebung als Zeitintervall zwischen der n-ten Periode der ersten Frequenz und der m-ten Periode der zweiten Frequenz zu erzeugen. Ein Pärchen aus bestimmten Perioden der beiden Frequenzen liefert ein gewünschtes Zeitintervall mit der durch die Differenzperiode gegebenen Auflösung. Es genügt, wenn Pärchen verfügbar sind, um das Zeitintervall zwischen zwei Sendesignalen zu füllen, da größere Zeiten dann durch Addition von ganzen Wiederholungsperioden erzeugbar sind. Alternativ kann man aber auch Pärchen über eine Wiederholungsperiode hinaus auswerten. Mit jeder oder jeder n-ten Synchronisierung werden die Zähler dementsprechend zurückgesetzt.

Es ist wichtig anzumerken, dass die höchstmögliche Auflösung, also der kleinste erzeugbare Zeitunterschied, nicht notwendig gleich der Differenzperiode ist. Bei einem Verhältnis der beiden Frequenzen von n/(n+1) ist dies der Fall, und ein solches Verhältnis ist auch bevorzugt. Das Beispiel anderer teilerfremder Zahlen wie etwa 3/8 zeigt, dass zwar die Differenzfrequenz 5 die Genauigkeit festlegt, aber nicht mit ihr identisch ist, denn auch in einem solchen System ist das kleinstmögliche zeitliche Offset 1. Nach entsprechender Sortierung sind sämtliche erforderlichen Offsets ebenso vorhanden wie im übersichtlicheren Fall n/(n+1). Bei dieser Betrachtung wurden die Einheiten herausgekürzt, die Überlegung ändert sich nicht, wenn man jede Zahl mit einer gemeinsamen Grundfrequenz beispielsweise von 10 MHz multipliziert.

Die Steuerung ist bevorzugt dafür ausgebildet, mehrfach nacheinander das Signal zu einem relativ zum Sendezeitpunkt gleichen Abtastzeitpunkt abzutasten. Dabei ist mit gleichem Abtastzeitpunkt natürlich nicht der absolut identische Zeitpunkt, sondern die gleiche Relativlage innerhalb eines Empfangssignals bei der nächsten Wiederholung des Sendens und Empfangens gemeint. Die gemäß Tabelle, Rechenvorschrift oder Zufallsgenerator für eine bestimmte der k Wiederholungen ermittelte zeitliche Verschiebung wird also mehrfach nacheinander verwendet. Derartige Mehrfachabtastungen wären herkömmlich gar nicht möglich, da eine gleiche Phasenlage erst wieder nach 100 ms vorliegt und damit die Ansprechzeit unvertretbar verlängert würde. Das durch das Frequenzoffset zeitgedehnte Signal kann für kostengünstige analoge Elemente wie Verstärker, Filter und auch den nachgelagerten A/D-Wandler zur eigentlichen Digitalisierung immer noch zu kurz sein. Die Mehrfachabtastung sorgt dann für eine zusätzliche Zeitdehnung.

Die Steuerung ist weiterhin bevorzugt dafür ausgebildet, die erste und/oder die zweite Frequenz für alle oder einige der I Wiederholungen zu verändern, insbesondere durch Veränderung der Teiler. Damit kann Störern ausgewichen werden, indem durch vorteilhaftere Wahl der Sende- und Abtastfrequenzen das Faltprodukt in einem anderen Bereich im Basisband erscheint. Eine Änderung der Frequenzen lässt sich besonders einfach durch Einstellung der Teiler in der PLL, aber auch durch Variation der Masterfrequenz erreichen, oder durch Anpassung des Verhaltens einer DDS.

Die Steuerung und/oder die Zeitbasiseinheit ist bevorzugt auf einem digitalen Logikbaustein, insbesondere einem FPGA (Field Progammable Gate Array), (C)PLD (Complex Programmable Logic Device), ASIC (Application-Specific Integrated Circuit) oder DSP (Digital Signal Processor) implementiert. Solche digitalen Baussteine ermöglichen eine an die Anwendung angepasste Auswertung und eine einfache Erzeugung der benötigten beiden Frequenzen, etwa wenn der Baustein bereits PLLs mit einstellbaren Teilern mitbringt. Wenn alle Elemente zur Signalerzeugung und -auswertung auf einem Baustein integriert sind, ergibt dies ein besonders robustes synchrones Design. Dies gilt weitgehend auch dann, wenn zumindest die Elemente der Zeitbasiseinheit integriert sind, die eigentliche Auswertung kann dann auf einem zusätzlichen Baustein stattfinden.

Der Sensor ist bevorzugt als Radarsensor ausgebildet, oder er arbeitet nach dem TDR-Prinzip, wobei eine Monosonde, eine Doppelsonde oder eine Koaxialsonde zur Führung des Signals vorgesehen ist. Beide Prinzipien profitieren von der robusteren erfindungsgemäßen Zeitdehnung.

Der Sensor wird bevorzugt als Füllstandssensor in einem Behälter verwendet, in dem mindestens eine Flüssigkeit oder ein Schüttgut die Grenzfläche bildet, um den Füllstand der Flüssigkeit oder des Schüttgutes zu ermitteln. Dies ist eine besonders häufige Anwendung in der Fabrik- und Prozessautomation.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung eines TDR-Sensors in einer Anwendung als Füllstandssensor;
- Fig. 2: ein Blockschaltbild eines Sensorkopfes mit der Ansteuerung des Sensors gemäß Figur 1;
- Fig. 3: eine Darstellung der Signalverläufe des Empfangssignals rf und des zeit- gedehnten Signals if bei herkömmlicher Zeitdehnung;
- Fig. 4: eine Darstellung des Empfangssignals if zur Erläuterung der erfindungs- gemäßen Wahl der Stützstellen bei der Zeitdehnung;
- Fig. 5: eine weitere Darstellung eines abzutastenden Empfangssignals rf ohne Störsignal;
- Fig. 6: eine Darstellung der linear abgetasteten Werte eines zeitgedehnten Signals if unter Störeinfluss mit einem sinusförmigen Störsignal;
- Fig. 7: eine Darstellung der zufälligen Verteilung der Stützstellen oder Abtastzeit- punkte für eine erfindungsgemäße Abtastung mit Time-Hopping bzw. Scrambling;
- Fig. 8: eine Darstellung ähnlich Fig. 6, bei der anstelle linearer Abtastung unter Verwendung der Stützstellen aus Fig. 7 abgetastet wurde, um ein Einzel- empfangssignal zu erhalten;
- Fig. 9: eine Darstellung eines Gesamtempfangssignals, bei der mehrmals wie in Figur 8 ein Einzelempfangssignal mit einer Time-Hopping-Sequenz abge- tastet und anschließend eine Scharmittelung über die Einzelempfangssig- nale durchgeführt wurde;
- Fig. 10: eine Darstellung der Korrelationsfunktion zwischen einem linear abgetas- teten gestörten Empfangssignal und einem ungestörten Empfangspuls;
- Fig. 11: eine Darstellung der Korrelationsfunktion zwischen einem mittels Time- Hopping abgetasteten Empfangssignal und einem idealen Empfangspuls;
- Fig. 12: ein Blockschaltbild einer Ausführungsform der erfindungsgemäßen Zeitba- siseinheit; und
- Fig. 13: ein Diagramm zur Erläuterung der Auskopplung von beliebigen Zeitinter- vallen zwischen Sendezeitpunkten und Abtastzeitpunkten zur Zeitdehnung.

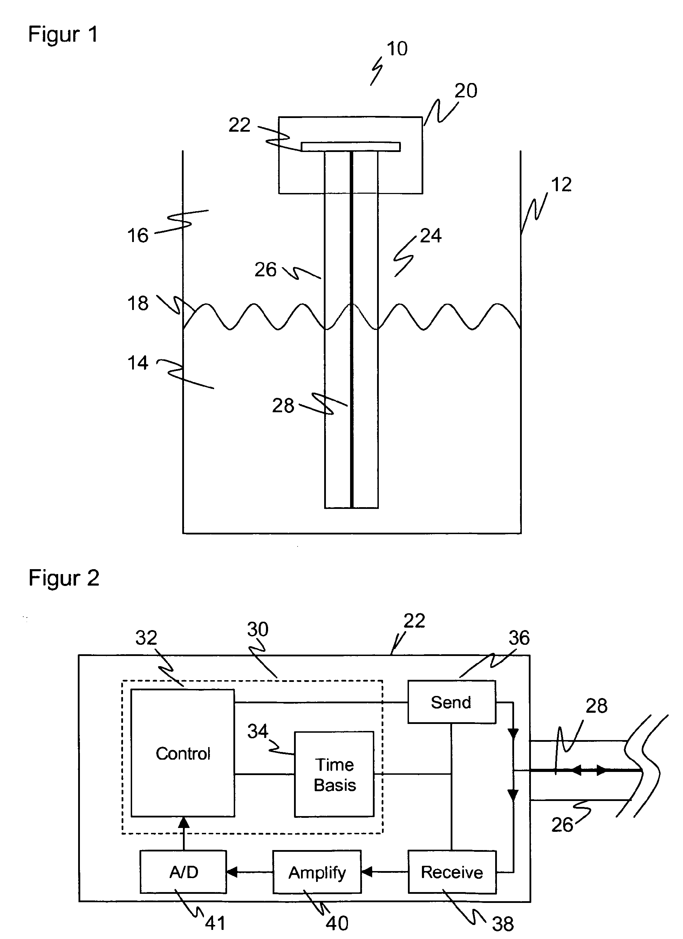

Figur 1 zeigt schematisch einen TDR-Sensor 10, der als Füllstandssensor in einem Tank oder Behälter 12 mit einem Medium oder einer Flüssigkeit 14 angebracht ist. Die Flüssigkeit 14 bildet gegenüber der Luft 16 eine Grenzfläche 18. Der Sensor 10 ist dafür ausgebildet, die Entfernung der Grenzfläche 18 zu ermitteln und daraus aus seiner bekannten Anbringungslage den Füllstand und bei Bedarf anhand der Geometrie des Behälters 12 auch die Menge der Flüssigkeit 14 abzuleiten. Obwohl die Ausbildung des Sensors 10 als Füllstandssensor ein sehr wichtiges Einsatzfeld ist, kann der Sensor 10 prinzipiell auch in anderen Gebieten eingesetzt werden, bei denen eine Grenzfläche zu lokalisieren ist. Dabei ist insbesondere an andere Grenzflächen 18 zu denken, beispielsweise zwischen verschiedenen Flüssigkeiten oder zu und zwischen Schüttgut oder Granulaten, oder an Störstellen in Leitungen.

Der Sensor 10 weist einen Sensorkopf 20 mit einer Steuerung 22 auf, die vorzugsweise auf einer gemeinsamen Platine untergebracht ist. Alternativ sind mehrere über Stecker verbundene Leiterplatten oder Flexprintträger denkbar. An die Steuerung 22 ist eine koaxiale Sonde 24 angeschlossen, welche einen Außenleiter 26 und einen Innenleiter 28 aufweist. Bei einer solchen geschlossenen Sonde 24 werden die elektromagnetischen Signale besonders störungsfrei geführt. Es ist aber auch denkbar, eine andere Sondenform einzusetzen, beispielsweise eine offene Monosonde, die leichter gereinigt werden kann, oder auch gar keine Sonde bei einem Sensor mit Radarprinzip.

Die in dem Sensorkopf 20 vorgesehene Steuerung 22 beziehungsweise ihre Platine ist in Figur 2 in einem Blockschaltbild dargestellt. Die eigentliche Steuerung bildet ein FPGA 30, der auch ein Mikroprozessor, DSP, ASIC oder ein ähnlicher digitaler Logikbaustein sowie eine Kombination mehrerer derartiger Bausteine sein kann. Neben der eigentlichen Auswertungslogik 32 ist auf dem FPGA 30 eine Zeitbasiseinheit 34 zur Einstellung von Sende- und Abtastzeitpunkten eines Mikrowellensenders 36 und eines Mikrowellenempfängers 38 implementiert. Alternativ kann die Zeitbasiseinheit 34 einen eigenen Logikbaustein oder Schaltkreis bilden. Mit der Zeitbasiseinheit 34 kann das empfangene Signal zeitgedehnt werden, wie weiter unten noch ausführlich beschrieben.

Über einen Verstärker 40, möglicherweise in manchen Anwendungen sinnvoller als Dämpfungsglied ausgebildet, und einen Analog-Digitalwandler 41 wird das zeitgedehnte Messsignal an die Auswertungslogik 32 zur Messsignalauswertung geleitet. Bevorzugt ist der Verstärker 40 in der Lage, sich auf den Signalpegel einzustellen und somit unter Ausnutzung der Auflösung des A/D-Wandlers 41 auch kleine Messsignale auswerten zu können, beziehungsweise es wird umgekehrt die Sendeleistung angepasst.

Wie auch schon einleitend beschrieben, wird bei einer Messung ein Puls über den Mikrowellensender 36 auf den Innenleiter 28 gegeben und die Laufzeit des an der Grenzfläche 18 entstehenden und in dem Mikrowellenempfänger 38 empfangenen Reflexpulses gemessen, um den Abstand der Grenzfläche 18 und damit den Füllstand in dem Behälter 12 zu ermitteln.

Die Sendepulse und damit auch die Empfangspulse sind extrem kurz und können von einem üblichen A/D-Wandler 41 nicht oder zumindest nicht mit genügend Auflösung abgetastet werden. Daher erfolgt eine Zeitdehnung des Empfangssignals mit Hilfe der Zeitbasiseinheit 34, damit die Auflösung des A/D-Wandlers für die Digitalisierung ausreicht. Das Grundprinzip der Zeitdehnung wurde bereits einleitend anhand der hinsichtlich der Signalformen vereinfachten Figur 3 erläutert.

Figur 4 zeigt einen realistischen Verlauf des auf einen einzigen Sendepuls hin empfangenen Signals und erläutert das erfindungsgemäße Abtastverfahren durch Time-Hopping (Zeitsprung) bzw. Scrambling (Durchmischen) der Abtastzeitpunkte. Dabei wächst anders als in Figur 3 die Zeitdifferenz dT zwischen zwei Stützstellen der Abtastung nicht gleichmäßig an, sondern ist frei wählbar. Dies wird durch Ziffern 1-6 angedeutet, welche beispielhaft die Abtastreihenfolge einiger Stützstellen angeben. Die erforderlichen Zeitdifferenzen dT sind also frei vorgegeben, wobei jegliche feste Vorgabe die Gefahr in sich birgt, hierdurch Regelmäßigkeiten und resultierende Artefakte in das Messsignal einzuführen, so dass eine zufällige Wahl der dT in vielen Fällen am günstigsten ist.

Werden die einzelnen Samples bei zufälligen, statistisch voneinander unabhängigen und unterschiedlichen Zeitdifferenzen Tᵢ zwischen Sende- und Abtastzeitpunkt gewonnen, die durch die zufälligen dT definiert sind, so ergibt sich ein rekonstruierter Signalverlauf, der sich aus einer Superposition des ungestörten Messsignals und einem Rauschsignal zusammensetzt. Aufgrund des Time-Hoppings ist das Rauschsignal echt zufällig, etwaige systematische Störeffekte durch Netzwerk, Antenne oder Leitung sind zwar noch vorhanden, aber statistisch unabhängig. Im Frequenzspektrum kann dieser erwünschte Effekt als Verteilung der Energie des Störers erklärt werden.

Das mit dem zufälligen Rauschen überlagerte Messsignal kann abhängig vom Frequenzspektrum des Sendesignals weiterverarbeitet werden. Für schmalbandige Sendesignale ist mit einem angepassten Bandpass eine Verbesserung des Signal-Rausch-Abstands erreichbar. Breitbandigere Sendesignale können beispielsweise mit angepassten Filtern ("Matched Filter"-Technik) oder Korrelation ausgewertet werden.

In einer erweiterten Ausführungsform kann der Kurvenzug, also das aus mehreren gesendeten und empfangenen Signalen abgetastete Einzelempfangssignal, mehrfach aquiriert werden. Wird dann bei jeder Aquisition eine neue Hopping-Sequenz verwendet, so ist das für einen Abtastpunkt gewonnene Signal mit jeder Wiederholung mit einem anderen, statistisch unabhängigen Störsignalanteil überlagert. Wegen der statistischen Unabhängigkeit wächst daher das Messsignal bei wiederholter Aquisition immer stärker aus dem Rauschuntergrund heraus, und der Signal-Rausch-Anteil nach Scharmittelung kann durch zusätzliche Widerholungen prinzipiell beliebig verbessert werden. Bei den Wiederholungen muss auch nicht immer der ganze Kurvenzug aufgezeichnet werden. Das Sendesignal ist einigermaßen stabil und nach einer Aufnahme bekannt, so dass es genügt, in den Wiederholungen nur den Messbereich oder sogar nur einen Abschnitt in der Umgebung des erwarteten Messwerts aufzuzeichnen, da der Messwert entweder häufig bereits mit den vorhandenen Informationen geschätzt oder zumindest näherungsweise aus der Historie geschätzt werden kann. Durch die so verringerte Datenmenge wird Auswertungszeit eingespart, und in Folge ist nur eine geringere Energieaufnahme erforderlich und die Eigenerwärmung vermindert.

Das Time-Hopping unterdrückt sehr wirkungsvoll Störer, die dem Messsignal nach Abtastung hochfrequente Störanteile aufprägen. Niederfrequente Störer, etwa amplitudenmodulierte Störungen mit sehr kleiner Störfrequenz, behalten aber über die gesamte Hopping-Sequenz hinweg einen systematischen Effekt. Die Voraussetzung einer statistischen Unabhängigkeit ist dann nicht mehr ausreichend gegeben, die Energie wird nicht weit genug über das Frequenzspektrum verteilt. Um dem zu begegnen, kann ein Hochpassfilter eingesetzt werden, um das Empfangssignal von diesen niederfrequenten Anteilen zu befreien. Daher ist auch bevorzugt, wenn das Sendesignal nur geringe niederfrequente Anteile hat, damit durch diese Filterung möglichst keine oder nur äußerst wenig Messinformation verloren geht.

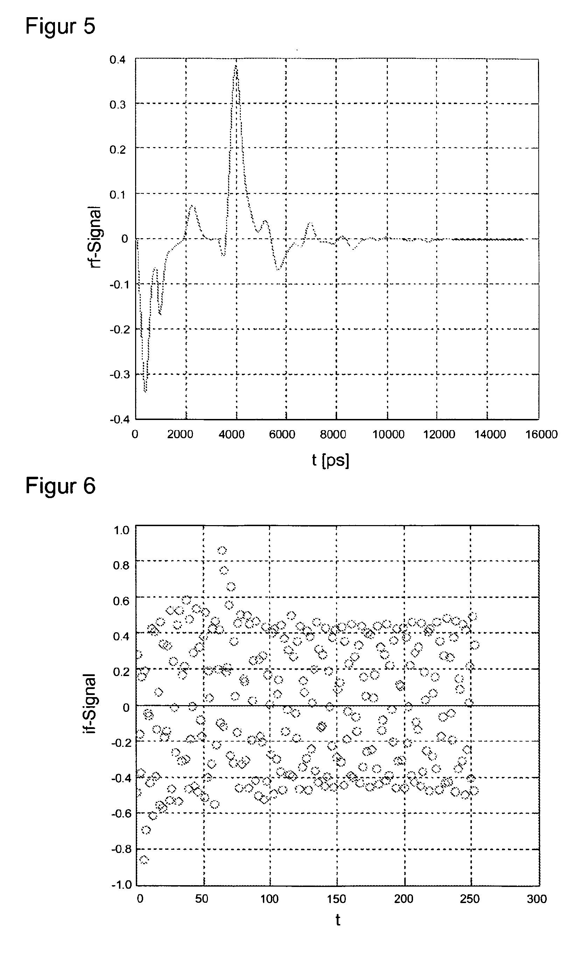

Die Wirkung des beschriebenen Vorgehens wird nachfolgend anhand der Figuren 5 bis 11 veranschaulicht. In diesen Figuren ist die Einheit der Zeitachse die effektive Auflösung der Abtastung, beispielsweise ein Zeitinkrement von 60,975 ps. Figur 5 zeigt zunächst noch einmal den zeitlichen Verlauf eines ungestörten Empfangssignals ähnlich dem in Figur 4. Das erste Minimum mit Nebenminimum ist das Sendesignal selbst. Das erste Maximum entsteht durch den u,-Wechsel an der Grenzfläche 18, seine Lage bestimmt also die gesuchte Messgröße. Das zweite größere Maximum ist ein Artefaktpuls vom Ende der Sonde 24, während die übrigen Spitzen von verschiedenen nicht näher zu betrachtenden Transienten und Störungen verursacht sind.

Figur 6 zeigt einen Scatterplot der Abtastwerte eines Empfangssignals gemäß Figur 5, welches mit einem sinusförmigen Störsignal überlagert und dann wie herkömmlich mit äquidistanten Stützstellen in linearer Abfolge abgetastet wurde. Man erkennt deutlich die Aliaseffekte, nämlich das mehrfache ineinander gespiegelte störende Sinussignal, aus dem sich selbst das starke Messartefakt vom Ende der Sonde 24 schon für das Auge in Kenntnis des eigentlichen Signals kaum erkennbar heraushebt. Ein Auswertungsalgorithmus wird hier kein genaues Messergebnis zurückliefern.

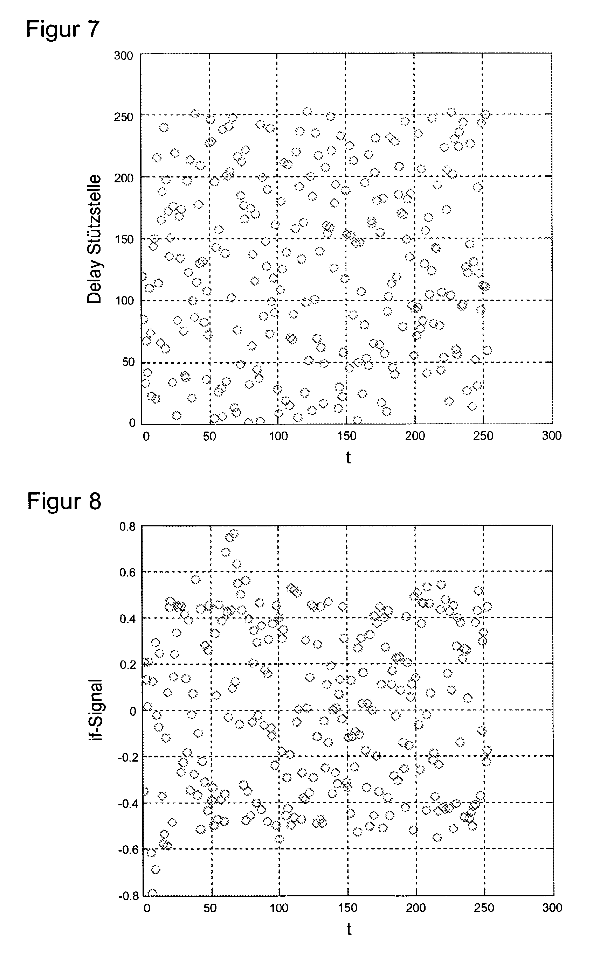

Figur 7 zeigt in einem weiteren Scatterplot eine beispielhafte Time-Hopping-Sequenz. Auf der X-Achse sind also die Abtastschritte, auf der Y-Achse die Abtastzeitpunkte bezüglich des Hochfrequenzsignals abgetragen. Mit anderen Worten lässt sich aus dem Diagramm die durch das Time-Hopping eingeführte zeitliche Verschiebung bei der ersten, zweiten, ... n-ten Abtastung ablesen. Ein guter Zufallsgenerator liefert eine Abtastsequenz, bei der in dem Scatterplot keinerlei Regelmäßigkeiten auszumachen sind.

Figur 8 zeigt die Abtastwerte des mit einem sinusförmigen Störsignal überlagerten Empfangssignals gemäß Figur 6, wobei statt der regelmäßigen linear ansteigenden Abtastzeitpunkte die Time-Hopping-Sequenz gemäß Figur 7 verwendet wurde. Bevor die Abtastwerte ausgewertet und in den Scatterplot der Figur 8 eingetragen werden, muss mit der Information der Zufallszahlen, wie sie in Figur 7 veranschaulicht ist, die eigentliche Reihenfolge decodiert oder rekonstruiert werden. Zwar erhebt sich auch in Figur 8 das Artefakt vom Ende der Sonde 24 kaum und das gesuchte Messsignal sogar überhaupt nicht aus dem Rauschband. Im Gegensatz zur Figur 6 sind aber die Aliaseffekt verschwunden, die Rauschwerte haben keine Regelmäßigkeit mehr. Daher ist auch das Messsignal an seiner Signatur eines Maximums zumindest zu erahnen. Der Effekt der Aufhebung von Regelmäßigkeiten im Rauschband ist je nach Störer und Güte des Zufallsgenerators nicht notwendig vollständig, aber zumindest eine deutliche Verbesserung.

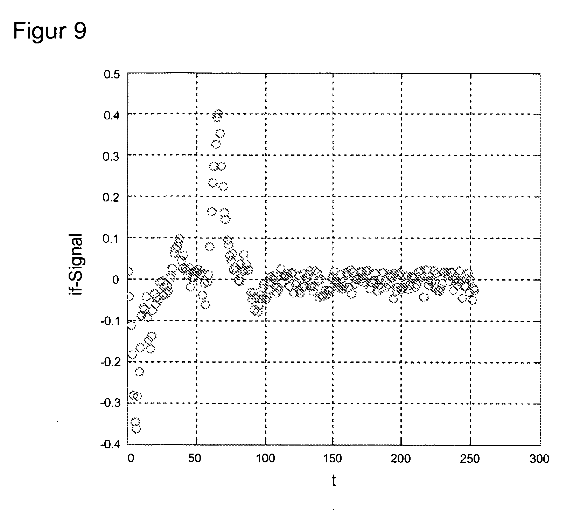

Für den Scatterplot der Figur 9 wurde das Verfahren gemäß Figur 8 mehrfach wiederholt und die Ergebnisse gemittelt. Deutlich erkennt man nun die drei Charakteristika Sendesignal als erstes Minimum, Messsignal als erstes und Messartefakt vom Ende der Sonde 24 als zweites Maximum. Durch weitere Iterationen und anschließende Mittelung kann die Signalgüte prinzipiell beliebig verbessert werden. Eine ähnliche Mittelung von herkömmlich wie in Figur 6 gewonnenen Signalen würde keine Verbesserung bringen, weil der Störanteil systematisch und nicht statistisch verteilt ist und sich daher nicht herausmittelt.

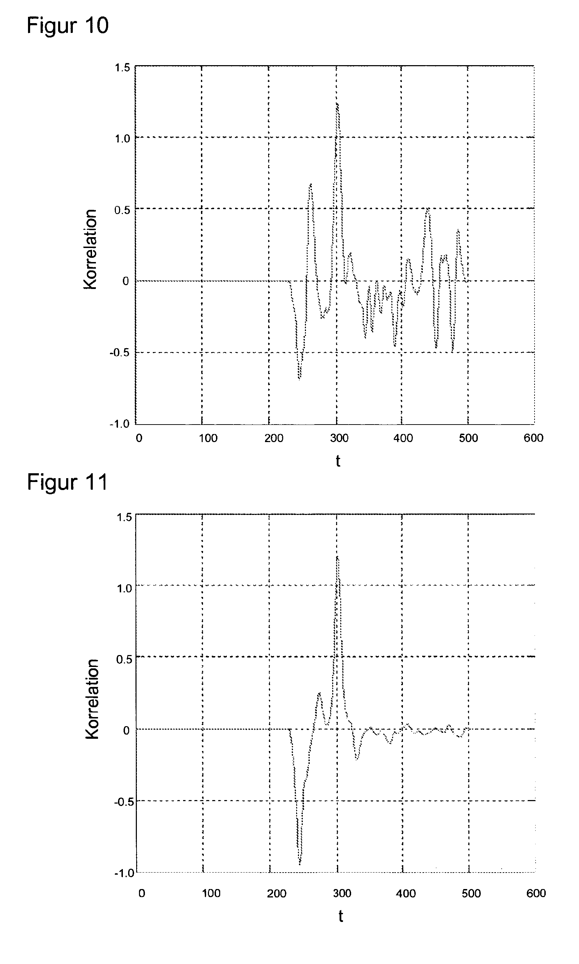

Der Effekt ist ein weiteres Mal in den Figuren 10 und 11 illustriert, in denen zum Vergleich die Korrelationsfunktion des Messsignals mit einem ungestörten Empfangssignal bei herkömmlicher Abtastung (Figur 10) und mit Time-Hopping (Figur 11) gezeigt ist. Der zu messende Empfangspuls entspricht jeweils dem ersten Maximum. Die erfindungsgemäß erzeugte Korrelationsfunktion ist deutlich stabiler mit wesentlich eindeutigeren Extrema, deren Lage ein Auswertungsalgorithmus wesentlich genauer bestimmen und damit die Messgenauigkeit des Sensors 10 steigern kann.

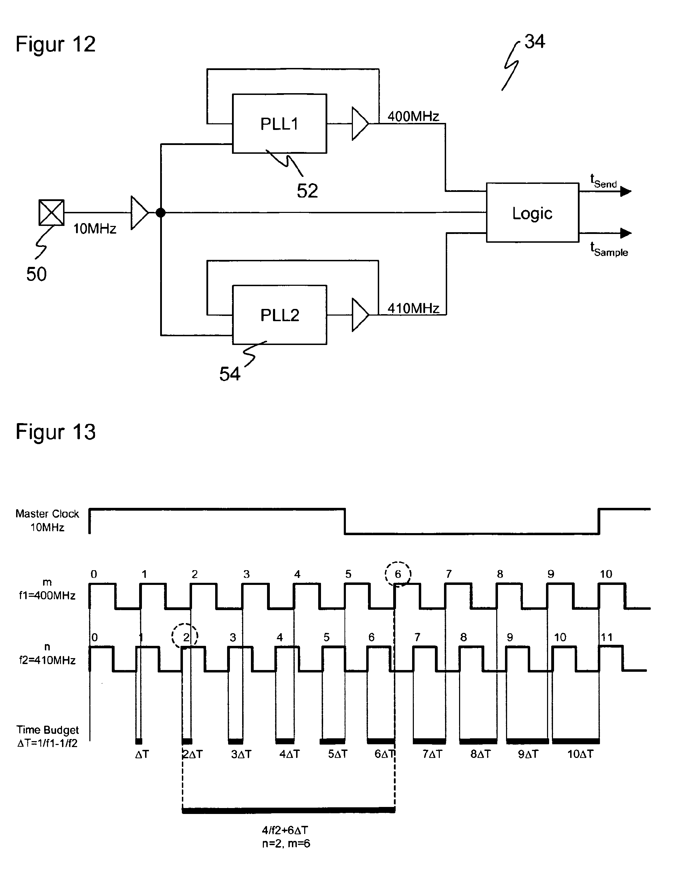

Voraussetzung für die Zeitdehnung mittels Time-Hopping ist die stabile freie Verfügbarkeit von Abtastzeitpunkten beziehungsweise Stützstellen. Figur 12 zeigt den Aufbau der Zeitbasiseinheit 34, mit der dies in einer bevorzugten Ausführungsform erreicht wird. Aus einem Mastertakt 50 von 10 MHz wird in einer ersten PLL 52 (Phase-locked Loop) und einer zweiten PLL 54 ein Takt abgeleitet, dessen Frequenz von f1=400 MHz bzw. f2=410 MHz dem Vielfachen der Masterfrequenz von 10 MHz des Mastertakts 50 entspricht. Dabei umfassen die PLLs 52, 54 jeweils die üblichen nicht dargestellten zugehörigen Elemente spannungsgesteuerter Oszillator (VCO), Phasendetektor und Schleifenfilter. Die Zeitbasiseinheit 34 erhält die beiden Frequenzen der PLLs 52, 54 sowie zur Synchronisation den Mastertakt 50 selbst. Die Frequenzen werden in der Zeitbasiseinheit 34 so verarbeitet, dass ihre Phasenablage zur reproduzierbaren Erzeugung von Zeitinkrementen genutzt werden kann. Die Zeitbasiseinheit 34 kann vollständig innerhalb des FPGA 30 arbeiten und ist dann besonders einfach implementierbar, kompakt mit der Auswertungslogik 30 integriert und wenig störanfällig.

Der Begriff "Teiler" bezieht sich also auf die Periode, die geteilt wird, die Frequenz als Kehrwert vervielfacht sich dabei. Die Teilung ist ganzzahlig. Selbstverständlich könnte nach demselben Prinzip auch mit nichtganzzahligen Teilern gearbeitet werden, wenn ein Baustein verfügbar ist, der damit stabil umgehen kann.

Eine hohe Regelbandbreite einer PLL erfordert einen kleinen Teilerfaktor in ihrer Rückkoppelschleife. Der Zeitunterschied zwischen den Perioden der beiden Frequenzen f1 und f2 ist ΔT=|1/f1-1/f2|=|(f1-f2)/f1*f2)|. Das erforderliche ΔT liegt für eine TDR-Anwendung beispielsweise im Rahmen von 20-100 ps. Dies hängt natürlich von der Pulsbreite oder allgemein dem Spektrum des Sendesignals ab, anschaulich bedeutet ein ΔT=50ps bei einer Pulsbreite von 500 ps, dass in der Größenordnung von 10 Abtastpunkte den Puls beschreiben.

Um also ΔT klein zu halten, kann einerseits die Differenz f2-f1 und andererseits das Produkt f1*f2 groß gewählt werden. Der einleitend beschriebene herkömmliche Ansatz beschränkt sich darauf, f2-f1 besonders klein zu wählen. Mit der erfindungsgemäßen Zeitbasiseinheit 34 ist ein größeres Produkt f1*f2 möglich, und damit kann auch die Differenz f2-f1 größer werden und weiterhin die Anforderung an ΔT erfüllt bleiben. Die größere Differenzfrequenz f2-f1 bedeutet, dass wesentlich schneller synchronisiert werden kann, um verbleibende Instabilitäten der PLLs 52, 54 auszugleichen, und dass gleiche Phasenlagen in einem deutlich verkürzten Intervall wieder verfügbar sind. Damit werden schnelle Time-Hopping-Sequenzen ermöglicht.

Wie in Figur 13 zu sehen ist, gewinnen die Flanken der beiden unterschiedlichen Frequenzen 400 MHz und 410 MHz zunehmend Abstand voneinander und treffen sich nach einer Periode des Mastertakts 50 von 100 ns wieder. Zu diesem Zeitpunkt erfolgt jeweils eine Synchronisation auf die theoretisch zeitgleiche steigende oder fallende Flanke, damit ein etwaiges Auseinanderlaufen der PLLs 52, 54 und des Mastertakts 50 ausgeglichen wird. Figur 13 ist vereinfacht und zeigt nur 10 bzw. 11 Perioden statt der eigentlich erforderlichen 40 bzw. 41 Perioden.

Die PLLs 52, 54 werden bevorzugt von dem FPGA 30 zur Verfügung gestellt. Das FPGA kann auch zusätzliche PLLs aufweisen, beispielsweise insgesamt vier, von denen zunächst für das nachfolgende Verfahren nur zwei genutzt werden. Die weiteren PLLs können aber zum Beispiel als Referenz zum Stabilisieren oder für andere Weiterbildungen eingesetzt werden. Die beiden Frequenzen können aber auch anders als mittels PLLs erzeugt werden, oder durch PLLs, die von dem FPGA 30 unabhängige Schaltungen bilden. Selbstverständlich sind eine von 10 MHz abweichende Masterfrequenz und andere als die beispielhaften Frequenzen f1=400 MHz und f2=410 MHz von der Erfindung umfasst, wobei die Wahl einen Ausgleich zwischen Stabilität der erzeugten abgeleiteten Frequenz und einer möglichst kurzen Differenzperiode finden muss. Zeitraster im Bereich von Pikosekunden und darunter sind durch diese Wahl zumindest prinzipiell erreichbar.

Die Perioden der abgeleiteten Frequenzen f1 und f2 werden in durch diese Frequenzen getriggerten Schieberegistern durchgezählt, so dass der Zeitbasiseinheit 34 oder der Auswertungslogik 30 wie in Figur 13 dargestellt bekannt ist, zu welcher Periode eine Flanke gehört. Zwischen der jeweils i-ten Periode von f1 und f2 bildet sich ein zunehmender Phasenunterschied aus, der nach einer vollen Periode des Mastertakts 50 gerade so groß wird, dass die 41te Periode von f2 zeitgleich mit der 40ten Periode von f1 zu liegen kommt. Diese Unterschiede stehen in Form von Zeitinkrements oder Zeitbudgets als Vielfache der Differenzperiode ΔT = 1/f1-1/f2 = 60,975 ps zur Verfügung. Dabei wird noch einmal auf die zur vereinfachten Darstellung abweichenden Zahlen 10 und 11 der Figur 13 hingewiesen.

Die Zeitbasiseinheit 34 wählt nun jeweils ein Pärchen aus n-ter Periode der Frequenz f2 und m-ter Periode der Frequenz f1 aus, um beliebige Vielfache der Differenzperiode zu erzeugen. Jedes Pärchen hat relativ zum Mastertakt 50 eine feste Position. Beispielsweise entspricht n=2 und m=6 einem Zeitintervall von 4/f2+6ΔT, wobei 1/f2=41ΔT gilt. Volle Perioden der Mastertakts werden dabei hinzugezählt, um Messperioden länger als 1/10 MHz = 100 ns zu füllen, beispielsweise durch eine übergeordnete, das Timing maskierende Steuereinheit, welche am Mastertakt festgemacht ist. Dabei werden mit jeder Synchronisation nach 100 ns die Zähler zurückgesetzt, so dass die Nummerierung der Pärchen neu beginnt. Sofern die Perioden von f1 und f2 über den Synchronisationszeitpunkt nach 100 ns weitergezählt werden, können alternativ auch die Pärchen unmittelbar Zeitintervalle länger als 100 ns festlegen. Um die Pärchen definiert auskoppeln zu können, sollten die beiden abgeleiteten Frequenzen f1 und f2 eine starre Kopplung zum Mastertakt haben, wie dies durch PLLs gegeben ist.

Mit Hilfe der beiden aus dem Mastertakt 50 abgeleiteten Frequenzen f1 und f2 steht somit für die Sendezeitpunkte und die Abtastzeitpunkte ein Zeitraster mit der durch die Differenzperiode zwischen den beiden Frequenzen f1 und f2 festgelegten Auflösung von 60,975 Pikosekunden zur Verfügung. Dieses Raster kann dazu genutzt werden, um Stützstellen in jeder denkbaren Reihenfolge zu wählen.

## Patentansprüche

1. Sensor (10), insbesondere Füllstandssensor, mit einem Sender (36) und einem Empfänger (38) zum Aussenden und Empfangen eines elektromagnetischen Signals, insbesondere eines Mikrowellensignals sowie mit einer Steuerung (32), welche dafür ausgebildet ist, die Entfernung einer Grenzfläche (18) anhand der Laufzeit des an der Grenzfläche (18) reflektierten Signals zu bestimmen und dabei zur Gewinnung eines zeitgedehnten Einzelempfangssignals das Signal k-mal wiederholt auszusenden und das jeweils daraufhin empfangene Signal zu mindestens einem Abtastzeitpunkt abzutasten, dessen zeitliche Verschiebung gegenüber dem zugehörigen Sendezeitpunkt mit der Wiederholung variiert, **dadurch gekennzeichnet,**
**dass** die Steuerung (32) weiterhin dafür ausgebildet ist, die zeitliche Verschiebung mit jeder Wiederholung entsprechend einer Tabelle oder einer Rechenvorschrift zu wählen, so dass die Abtastreihenfolge der durch die Abtastzeitpunkte vorgegebenen Stützstellen des Einzelempfangssignals anders als gleichmäßig fortschreitend beliebig vorgebbar ist.

2. Sensor (10) nach Anspruch 1,
wobei die Tabelle oder Rechenvorschrift eine zufällige oder pseudozufällige Abtastreihenfolge vorgibt, insbesondere durch Ziehen ohne Zurücklegen mit einem Zufallsgenerator hoher Güte.

3. Sensor (10) nach Anspruch 1 oder 2,
wobei die Steuerung (32) dafür ausgebildet ist, die Aufnahme eines Einzelempfangssignals 1-fach zu wiederholen und durch Verrechnen der Einzelempfangssignale ein Gesamtempfangssignal zu erzeugen, wobei insbesondere die Tabelle oder Rechenvorschrift eine Abhängigkeit von der Wiederholung aufweist.

4. Sensor (10) nach einem der vorhergehenden Ansprüche,
wobei mindestens ein Filter vorgesehen ist, welcher dafür ausgebildet ist, die Einzelempfangssignale und/oder das Gesamtempfangssignal von niederfrequenten Anteilen zu befreien.

5. Sensor (10) nach einem der vorhergehenden Ansprüche,
wobei eine Zeitbasiseinheit (34) vorgesehen ist, welche dafür ausgebildet ist, die zeitlichen Verschiebungen zur Verfügung zu stellen, indem das Signal zu mittels einer ersten Frequenz (f1) festgelegten Sendezeitpunkten ausgesandt und die jeweils empfangenen Signale zu mittels einer zweiten Frequenz (f2) ungleich der ersten Frequenz (f1) festgelegten Abtastzeitpunkten abgetastet werden.

6. Sensor nach Anspruch 5,
wobei die Zeitbasiseinheit (34) mindestens eine DDS-Einheit aufweist, mittels derer die erste Frequenz (f1) und/oder die zweite Frequenz (f2) erzeugbar ist.

7. Sensor (10) nach Anspruch 5,
wobei die Zeitbasiseinheit (34) dafür ausgebildet ist, die erste Frequenz (f1) und die zweite Frequenz (f2) mit jeweils einem ganzzahligen Teiler aus einem gemeinsamen Mastertakt (50) abzuleiten, so dass die Differenzfrequenz zwischen der ersten Frequenz (f1) und der zweiten Frequenz (f2) gleich oder ein Vielfaches einer dem Mastertakt (50) entsprechenden Masterfrequenz ist, wobei insbesondere die Zeitbasiseinheit (34) eine erste PLL (52) mit einem ersten Teiler des Mastertaktes für die erste Frequenz (f1) und eine zweite PLL (54) mit einem zweiten Teiler des Mastertaktes für die zweite Frequenz (f2) aufweist, und wobei der erste Teiler und der zweite Teiler so gewählt sind, dass eine möglichst kleine Differenzperiode im Bereich einiger hundert, einiger zehn oder einiger Pikosekunden entsteht.

8. Sensor (10) nach einem der Ansprüche 5 bis 7,
wobei die Zeitbasiseinheit (34) dafür ausgebildet ist, beliebige zeitliche Verschiebungen zwischen Sendezeitpunkten und Abtastzeitpunkten mit einer durch die Differenzfrequenz gegebenen zeitlichen Auflösung zur Verfügung zu stellen, wobei insbesondere die Zeitbasiseinheit (34) einen ersten Zähler und einen zweiten Zähler aufweist, um die vollständigen Perioden der ersten Frequenz (f1) beziehungsweise der zweiten Frequenz (f2) zu zählen, und wobei die Zeitbasiseinheit (34) dafür ausgebildet ist, die zeitliche Verschiebung als Zeitintervall zwischen der n-ten Periode der ersten Frequenz (f1) und der m-ten Periode der zweiten Frequenz (f2) zu erzeugen.

9. Sensor (10) nach einem der Ansprüche 5 bis 8,
wobei die Steuerung (32) dafür ausgebildet ist, die erste Frequenz (f1) und/oder die zweite Frequenz (f2) für alle oder einige der I Wiederholungen zu verändern, insbesondere durch Veränderung der Teiler.

10. Sensor (10) nach einem der vorhergehenden Ansprüche,
wobei die Steuerung (32) und/oder die Zeitbasiseinheit (34) auf einem digitalen Logikbaustein (30), insbesondere einem FPGA, PLD, DSP oder ASIC implementiert ist.

11. Sensor (10) nach einem der vorhergehenden Ansprüche,
der als Radarsensor ausgebildet ist, oder der nach dem TDR-Prinzip arbeitet, wobei eine Monosonde, eine Doppelsonde oder eine Koaxialsonde (24) zur Führung des Signals vorgesehen ist.

12. Verfahren zur Messung der Entfernung zu einer Grenzfläche (18) anhand der Laufzeit eines ausgesandten und an der Grenzfläche (18) reflektierten Signals, insbesondere eines Mikrowellensignals, wobei zur Gewinnung eines zeitgedehnten Einzelempfangssignals das Signal k-mal wiederholt ausgesandt und das jeweils daraufhin empfangene Signal zu mindestens einem Abtastzeitpunkt abgetastet wird, dessen zeitliche Verschiebung gegenüber dem Sendezeitpunkt mit der Wiederholung variiert,
**dadurch gekennzeichnet,**
**dass** die zeitliche Verschiebung mit jeder Wiederholung entsprechend einer Tabelle oder einer Rechenvorschrift gewählt wird und so eine beliebige gewünschte und nicht gleichmäßig fortschreitende, insbesondere zufällige oder pseudozufällige Abtastreihenfolge der durch die Abtastzeitpunkte festgelegten Stützstellen des Einzelempfangssignals vorgegeben wird.

13. Verfahren nach Anspruch 12,
wobei die Aufnahme eines Einzelempfangssignals I-fach wiederholt und durch Verrechnen der Einzelempfangssignale ein Gesamtempfangssignal erzeugt wird.

14. Verfahren nach Anspruch 12 oder 13,
wobei die zeitlichen Verschiebungen erzeugt werden, indem das Signal zu mittels einer ersten Frequenz (f1) festgelegten Sendezeitpunkten ausgesandt und die jeweils empfangenen Signale zu mittels einer zweiten Frequenz (f2) ungleich der ersten Frequenz (f1) festgelegten Abtastzeitpunkten abgetastet werden,
wobei die erste Frequenz (f1) und die zweite Frequenz (f2) mit einem ganzzahligen Teiler aus einem gemeinsamen Mastertakt (50) abgeleitet werden, so dass die Differenzfrequenz zwischen der ersten Frequenz (f1) und der zweiten Frequenz (f2) gleich oder ein Vielfaches einer dem Mastertakt (50) entsprechenden Masterfrequenz ist,
und wobei die jeweils von der Tabelle oder Rechenvorschrift geforderte zeitliche Verschiebung als Zeitintervall zwischen der n-ten Periode der ersten Frequenz (f1) und der m-ten Periode der zweiten Frequenz (f2) erzeugt wird.

15. Verfahren nach einem der Ansprüche 12 bis 14,
wobei für die Aufnahme zumindest eines der I Einzelempfangssignale einer oder mehrere der folgenden Werte oder Vorschriften variiert wird: die Tabelle oder Rechenvorschrift, die erste Frequenz (f1) oder die zweite Frequenz (f2).

## Claims

1. A sensor (10), in particular a filling level sensor, having a transmitter (36) and a receiver (38) for the transmission and reception of an electromagnetic signal, in particular of a microwave signal, as well as having a controller (32) which is made to determine the distance of a boundary surface (18) with reference to the transit time of the signal reflected at the boundary surface (18) and in so doing to transmit the signal repeatedly k times for the obtaining of a time-expanded single received signal and to sample the respective signal thereupon received at at least one sampling time whose time shift with respect to the associated transmission time varies with the repetition,
**characterised in that**
the controller (32) is furthermore made to select the time shift in accordance with a table or with a calculation rule with each repetition so that the sampling sequence of the sampling points of the single received signal preset by the sampling times can be preset as desired differently from a uniform progression.

2. A sensor (10) in accordance with claim 1, wherein the table or the calculation rule presets a random or pseudo-random sampling sequence, in particular by sampling without replacement, using a high-quality random generator.

3. A sensor (10) in accordance with claim 1 or claim 2, wherein the controller (32) is made to repeat the recording of a single received signal I times and to generate a total received signal by offsetting the single received signals, wherein in particular the table or the calculation rule has a dependency on the repetition.

4. A sensor (10) in accordance with any one of the preceding claims, wherein at least one filter is provided which is made to liberate the single received signals and/or the total received signal from low-frequency portions.

5. A sensor (10) in accordance with any one of the preceding claims, wherein a time-base generator (34) is provided which is made to provide the time shifts in that the signal is transmitted at transmission times fixed by means of a first frequency (f1) and the respective received signals are sampled at sampling times fixed by means of a second frequency (f2) unlike the first frequency (f1).

6. A sensor in accordance with claim 5, wherein the time base generator (34) has at least one DDS unit by means of which the first frequency (f1) and/or the second frequency (f2) can be generated.

7. A sensor (10) in accordance with claim 5, wherein the time base generator (34) is made to derive the first frequency (f1) and the second frequency (f2) with a respective whole-number divisor from a common master clock pulse (50) so that the difference frequency between the first frequency (f1) and the second frequency (f2) is equal to or is a multiple of a master frequency corresponding to the master clock pulse (50), wherein in particular the time base generator (34) has a first PLL (52) having a first divisor of the master clock pulse for the first frequency (f1) and a second PLL (54) with a second divisor of the master clock pulse for the second frequency (f2), and wherein the first divisor and the second divisor are selected so that a difference period arises which is as small as possible in the range of some hundred, some ten or some few picoseconds.

8. A sensor (10) in accordance with any one of the claims 5 to 7,
wherein the time base unit (34) is made to provide any desired time shifts between transmission times and sampling times with a time resolution given by the difference frequency; wherein in particular the time base generator (34) has a first counter and a second counter to count the complete periods of the first frequency (f1) or of the second frequency (f2); and wherein the time base generator (34) is made to generate the time shift as a time interval between the nth period of the first frequency (f1) and the mth period of the second frequency (f2).

9. A sensor (10) in accordance with any one of the claims 5 to 8,
wherein the controller (32) is made to change the first frequency (f1) and/or the second frequency (f2) for all or some of the I repetitions, in particular by changing the divisors.

10. A sensor (10) in accordance with any one of the preceding claims, wherein the controller (32) and/or the time base generator (34) is implemented on a digital logic component, in particular on an FPGA, PLD, DSP or ASIC.

11. A sensor (10) in accordance with any one of the preceding claims, which is made as a radar sensor or which works in accordance with the TDR principle, wherein a single probe, a dual probe or a coaxial probe (24) is provided for the conduction of the signal.

12. A method for the measurement of the distance from a boundary surface (18) with reference to the transit time of a transmitted signal which is reflected at the boundary surface (18), in particular of a microwave signal, wherein the signal is transmitted repeatedly k times for the gaining of a time-extended single received signal and the respective signal thereupon received is sampled at at least one sampling time whose time shift with respect to the transmission time varies with the repetition,
**characterised in that**
the time shift is selected in accordance with a table or with a calculation rule with each repetition and thus any desired, in particular random or pseudo-random, sampling sequence, which does not progress uniformly, of the sampling points of the single received signal fixed by the sample times is preset.

13. A method in accordance with claim 12, wherein the recording of a single received signal is repeated I times and a total received signal is generated by offsetting the single received signals.

14. A method in accordance with claim 12 or claim 13, wherein the time shifts are generated in that the signal is transmitted at transmission times fixed by means of a first frequency (f1) and the respective received signals are sampled at sampling times fixed by means of a second frequency (f2) unlike the first frequency (f1); wherein the first frequency (f1) and the second frequency (f2) are derived with a whole-number divisor from a common master clock pulse (50) so that the difference frequency between the first frequency (f1) and the second frequency (f2) is equal to or is a multiple of a master frequency corresponding to the master clock pulse (50); and wherein the respective time shift required by the table or by the calculation rule is generated as a time interval between the nth period of the first frequency (f1) and the mth period of the second frequency (f2).

15. A method in accordance with any one of the claims 12 to 14, wherein at least one of the I single received signals of one or more of the following values or rules is varied for the recording: the table or calculation rule, the first frequency (f1) or the second frequency (f2).

## Revendications

1. Capteur (10), en particulier capteur de niveau de remplissage, comprenant un émetteur (36) et un récepteur (38) pour émettre et recevoir un signal électromagnétique, en particulier un signal à micro-ondes, et comprenant une commande (32), laquelle est réalisée pour déterminer l'éloignement d'une surface limite (18) à l'aide de du temps de parcours du signal réfléchi au niveau de la surface limite (18) et, pour récupérer ici un signal de réception individuel allongé dans le temps, le signal est émis de façon répétée k-fois et le signal respectivement reçu à la suite est balayé au moins à un instant de balayage dont le décalage temporel varie par rapport à l'instant d'émission associé avec la répétition,
**caractérisé en ce que** la commande (32) est en outre réalisée pour choisir le décalage temporel à chaque répétition en correspondance d'un tableau ou d'une instruction de calcul, de sorte que la succession de balayage des points d'appui, imposés par les instants de balayage, du signal de réception individuel peut être prédéterminée de façon quelconque d'une autre manière qu'une progression régulière.

2. Capteur (10) selon la revendication 1,
dans lequel le tableau ou l'instruction de calcul impose une succession de balayage aléatoire ou pseudoaléatoire, en particulier par tirage sans report avec un générateur aléatoire de haute qualité.

3. Capteur (10) selon la revendication 1 ou 2,
dans lequel la commande (32) est réalisée pour répéter 1-fois l'enregistrement d'un signal reçu individuel et, par calcul des signaux reçus individuels pour engendrer un signal de réception global, et le tableau ou l'instruction de calcul présente ici en particulier une dépendance de la répétition.

4. Capteur (10) selon l'une des revendications précédentes,
dans lequel il est prévu au moins un filtre qui est réalisé pour débarrasser les signaux reçus individuels et/ou le signal reçu global des parts à basse fréquence.

5. Capteur (10) selon l'une des revendications précédentes,
dans lequel est prévue une unité de base temporelle (34) qui est réalisée pour mettre à disposition des décalages temporels, en ce que le signal est émis à des instants d'émission déterminés au moyen d'une première fréquence (f1) et les signaux reçus respectifs sont balayés à des instants de balayage déterminés au moyen d'une seconde fréquence (f2) qui n'est pas égale à la première fréquence (f1).

6. Capteur selon la revendication 5,
dans lequel l'unité de base temporelle (34) comprend au moins une unité DDS, au moyen de laquelle il est possible de générer la première fréquence (f1) et/ou la seconde fréquence (f2).

7. Capteur (10) selon la revendication 5,
dans lequel l'unité de base temporelle (34) est réalisée pour dériver la première fréquence (f1) et la seconde fréquence (f2) avec un diviseur entier respectif à partir d'une cadence maître commune (50), de sorte que la fréquence différentielle entre la première fréquence (f1) et la seconde fréquence (f2) est égale à une fréquence maître correspondant à la cadence maître (50) ou à un multiple de celle-ci, et l'unité de base temporelle (34) comprend en particulier un premier circuit PLL (52) avec un premier diviseur de la cadence maître pour la première fréquence (f1) et un second circuit PLL (54) avec un second diviseur de la cadence maître pour la seconde fréquence (f2), et le premier diviseur et le second diviseur sont ainsi choisis qu'il apparaît une période différentielle aussi faible que possible dans la plage de quelques centaines, quelques dizaines ou quelques picosecondes.

8. Capteur (10) selon l'une des revendications 5 à 7,
dans lequel l'unité de base temporelle (34) est réalisée pour mettre à disposition des décalages temporels quelconques entre les instants d'émission et les instants de balayage avec une résolution temporelle donnée par la fréquence différentielle, et l'unité de base temporelle (34) comprend en particulier un premier compteur et un second compteur, afin de compter les périodes entières de la première fréquence (f1) ou respectivement de la seconde fréquence (f2), et l'unité de base temporelle (34) est réalisée pour engendrer le décalage temporel sous forme d'intervalle temporel entre la n-ième période de la première fréquence (f1) et la m-ième période de la seconde fréquence (f2).

9. Capteur (10) selon l'une des revendications 5 à 8,
dans lequel la commande (32) est réalisée pour modifier la première fréquence (f1) et/ou la seconde fréquence (f2) pour toutes ou pour quelques-unes des 1 répétitions, en particulier par modification des diviseurs.

10. Capteur (10) selon l'une des revendications précédentes,
dans lequel la commande (32) et/ou l'unité de base temporelle (34) est mise en oeuvre sur un composant logique numérique (30), en particulier un composant FPGA, PLD, DSP ou ASIC.

11. Capteur (10) selon l'une des revendications précédentes, réalisé sous forme de capteur radar, ou qui fonctionne suivant le principe TDR, dans lequel il est prévu une mono-sonde, une double sonde ou une sonde coaxiale (24) pour guider le signal.

12. Procédé pour mesurer l'éloignement par rapport à une surface limite (18) en se basant sur le temps de parcours d'un signal émis et réfléchi au niveau de la surface limite (18), en particulier d'un signal à micro-ondes, dans lequel pour récupérer un signal de réception individuel allongé dans le temps, le signal est émis à répétition k-fois et le signal reçu respectivement ensuite est balayé à au moins un instant de balayage dont le décalage temporel varie par rapport à l'instant d'émission avec la répétition,
**caractérisé en ce que**
le décalage temporel est choisi à chaque répétition en correspondance d'un tableau ou d'une instruction de calcul, et on impose ainsi une succession de balayage quelconque souhaitée qui ne progresse pas régulièrement, en particulier aléatoire ou pseudoaléatoire, des points de soutien, déterminés par les points de balayage, du signal de réception individuel.

13. Procédé selon la revendication 12,
dans lequel l'enregistrement d'un signal de réception individuel est répété 1-fois et par calcul des signaux de réception individuels on engendre un signal de réception global.

14. Procédé selon la revendication 12 ou 13,
dans lequel les décalages temporels sont engendrés en émettant le signal à des instants d'émission déterminés au moyen d'une première fréquence (f1) et en balayant les signaux respectivement reçus à des instants de balayage déterminés au moyen d'une seconde fréquence (f2) qui n'est pas égale à la première fréquence (F1),
dans lequel la première fréquence (f1) et la seconde fréquence (f2) sont dérivées à partir d'une cadence maître commune (50) avec un diviseur entier, de sorte que la fréquence différentielle entre la première fréquence (f1) et la seconde fréquence (f2) est égale à une fréquence maître correspondant à la cadence maître (50), ou un multiple de celle-ci,
et dans lequel le décalage temporel requis par le tableau ou par l'instruction de calcul est engendré à titre d'intervalle temporel entre la n-ième période de la première fréquence (f1) et la m-ième période de la seconde fréquence (f2).

15. Procédé selon l'une des revendications 12 à 14,
dans lequel pour l'enregistrement de l'un au moins des 1 signaux de réception individuels, on fait varier une ou plusieurs des valeurs ou des instructions suivantes : le tableau ou l'instruction de calcul, la première fréquence (f1) ou la seconde fréquence (f2).
